# EUROPEAN PATENT APPLICATION

(11) **EP 0 938 088 A2**
(43) Date of publication of application: **25.08.1999**
(21) Application number: 99301190.7
(22) Date of filing: 18.02.1999
(51) Int. Cl.: G11B 19/20

(54) **Hard disk drive device**

(30) Priority: 19.02.1998 JP 5430798
(71) Applicant: Minebea Kabushiki Kaisha, Kitasaku-gun, Nagano-ken (JP)
(72) Inventor: Obara, Rikuro, c/o Minebea Kabushiki Kaisha, Kitasaku-gun, Nagano-ken (JP)
(74) Representative: Warren, Anthony Robert

(57) **Abstract**

The present invention relates to an improved hard disk drive, provided with a motor (1) including a rotor or hub (14) having, around the outer periphery thereof a downwardly depending flange (15). The hub is journalled rotatably on a base (2) by means of a bearing means (4). The hub is provided with a magnet (16) on the inner peripheral surface of the downwardly depending flange (15), and with an inner shoulder (19) on the top thereof. A stator (17) is provided on the base (2) so as to be opposed, face to face, with said magnet (16), said stator including coils (18). A magnetic disk (20) having a central aperture (20a) is, in operation, fitted around the inner shoulder (19) on the hub.

The outer diameter (D₁) of the downwardly depending flange (15) of said hub (14) is larger than the inner diameter of the central aperture (20a) of the magnetic disk. The outer diameter (D₂) of the magnet (16) surrounded by said downwardly depending flange (15) is larger than the outer diameter (D₄) of said inner should (19). The inner diameter of the magnet (16), as well as the outer and inner (D₅) diameters of the stator (17) are enlarged, and the outer diameter (D₆) of the bearing means (4) is enlarged.

## Description

### Background of the invention

### Technical Field

The present invention relates to an improvement of the hard disk drive device employed for example in computers for storing data magnetically.

### Description of the prior art

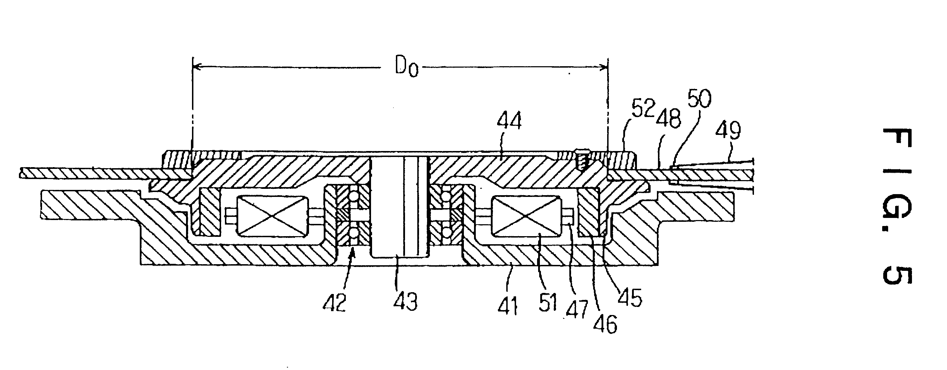

A hard disk drive device of the prior art as shown in Fig. 5 includes a shaft 43 supported on a base 41 by means of bearing means 42. A rotor or hub 44 is fitted securely around the shaft 43. A magnet 46 is provided on the inner surface of the flange 45 depending downwardly from the outer periphery of the hub. A stator 47 having coils 51 is connected to the base so as to be opposed face to face with the inner surface of the magnet.

A magnetic disk 48 is mounted on the outer peripheral portion of the hub 44. The oscillation of the disk is adapted to be inhibited by a disk restraining plate 52. Reading and writing of the magnetic data from the given sector of the magnetic disk 48 is effected by the magnetic head 50 provided at the distal end of the head arm 49.

In recent years, it is desired to provide a smaller, thinner, and lighter weight, as well as impact resistant,magnetic storage means, especially a hard disk drive device.

When impact is applied to the hard disk drive means, the impact energy is apt to be incentrated on the bearing means 42 journalling the rotor or hub 44 of the motor for driving the magnetic disk, so that the bearing means is the element most liable to be damaged.

When the bearing means is damaged, the accuracy of the rotation of the magnetic disk 48 will suffer, and the reading and writing of the magnetic data can not be accomplished accurately, and noise and vibration are produced.

One of the countermeasures which can be taken for preventing the damaging of the bearing means is to strengthen the bearing means itself. This countermeasure is confronted with the problem that the magnetic disk 48 is standardized to have an outer diameter of 2.5 inch or 3.5 inch, and the central aperture thereof is also standardized to have an inner diameter D₀ of 20.0 mm or 25.0mm respectively.

In other words, the outer diameter of the hub as well as that of the magnet 46 and/or the stator 47 is adapted to be defined in accordance with the diameter of the central aperture of the magnetic disk, so that bearing means 42 of sufficient size and strength can not be used.

Although the countermeasure of reducing the thickness of said magnet 46 or the radial length of the stator 47 to provide a space required for enlarging the bearing means can be taken, this will be detremental to functions of the motor such as the rotational torque or the rotational speed. In this connection, this countermeasure can not be adopted.

Accordingly, the object of the present invention is to provide a hard disk drive device having a bearing means of larger size and sufficient strength, improved impact resistance, high accuracy of rotation, and high reliability.

### Summary of the Invention

These and other objects are achieved by a hard disk drive device comprising a motor including a rotor or hub and a stator, and a magnetic disk. The hub has a flange depending downwardly from the outer periphery thereof. The hub is journalled rotatably on a base by means of a bearing means. The hub is provided with a magnet on the inner peripheral surface of the downwardly depending flange. The hub is also provided with an inner shoulder on the top thereof. The stator is provided on the base so as to be opposed, face to face, with said magnet. The stator includes coils. The magnetic disk has a central aperture to be fitted around the inner shoulder provided on the hub. The outer diameter of the downwardly depending flange of said hub is larger than the inner diameter of the central aperture of the magnetic disk. The outer diameter of said magnet surrounded by said downwardly depending flange is larger than the outer diameter of said inner shoulder. The inner diameter of the magnet and the outer and inner diameters of the stator are enlarged, and the outer diameter of the bearing means is also enlarged.

Further, in accordance with the present invention, the hub also includes an outer shoulder larger in its diameter than that of the inner shoulder and smaller than that of the downwardly depending flange.

### Brief description of the drawings

Further features of the present invention will become apparent to those skilled in the art to which the present invention relates from reading the following specification with reference to the accompanying drawings, in which:

Fig. 1 is a perspective view of the hard disk drive device of the present invention.

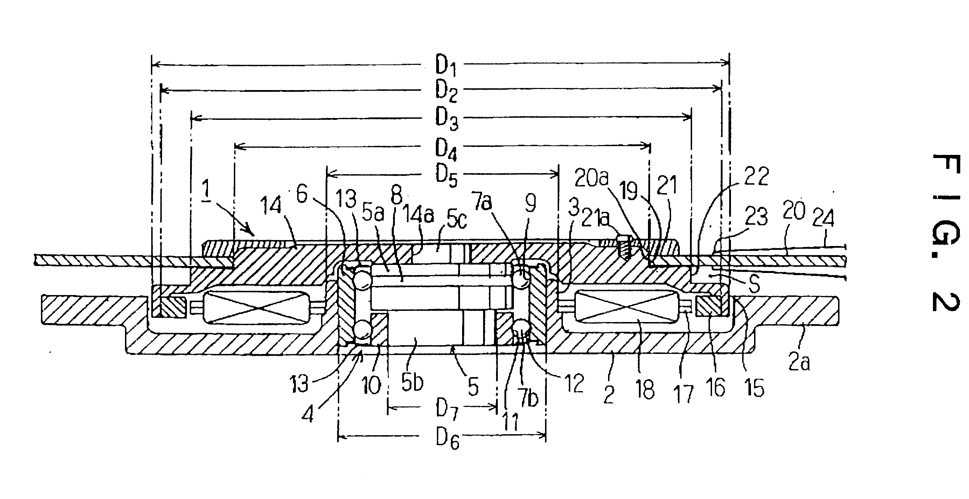

Fig. 2 is a longitudinal cross-sectional view of the hard disk drive device of the first embodiment of the present invention.

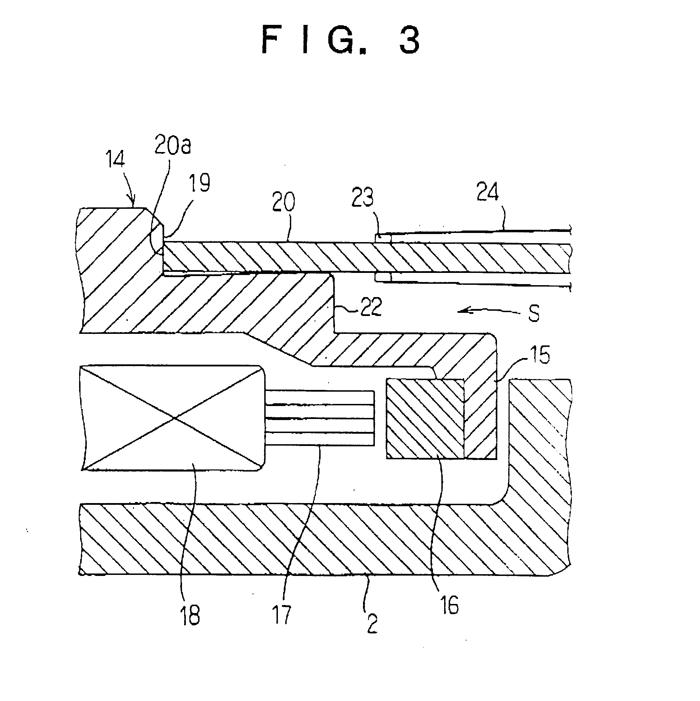

Fig. 3 is an enlarged longitudinal sectional view of the substantial part of the hard disk drive device of the first embodiment of the present invention.

Fig. 4 is a longitudinal cross-sectional view of the hard disk drive device of the second embodiment of the present invention.

Fig. 5 is a longitudinal sectional view of the hard disk drive device in accordance with the prior art apparatus.

### Detailed description of the present invention

A preferred embodiment of a hard disk drive device in accordance with the present invention will now be described in detail with reference to the attached drawings.

In the attached drawings, reference numeral 1 is applied to a motor including a base 2, a flange 2a formed around the periphery of the base, a cylindrical sleeve 3 formed at the center of the base integrally therewith, and a bearing means 4 rotatablly journaling a shaft 5.

Said bearing means 4 is for example of a double row bearing apparatus including an outer race 6 of sleeve form with which upper and lower rolling contact grooves 9 and 12 are provided on its inner peripheral surface, a stepped shaft 5 having a larger diameter portion 5a and reduced diameter portion 5b, an inner race 10 having on its outer peripheral surface an outer rolling contact groove 11, and upper and lower rows of balls 7a and 7b. The balls 7a of the upper row are interposed between a rolling contact groove 8 formed directly on the outer peripheral surface of the larger diameter portion 5a of the shaft and the upper rolling contact groove 9 of the outer race 6. The balls 7b of the lower row are interposed between the rolling contact groove 11 of the inner race 10 fitted around the reduced diameter portion 5b of the shaft 5 and the lower rolling contact groove 12 of the outer race. Further, a sealing plate 13 is mounted on the respective end of the outer race. The outer diameter of the larger diameter portion of the shaft 5 is the same as that of the inner race 10. In this connection, the balls 7a and 7b are formed to have the same diameter.

The shaft 5 is securely fitted at its upper end 5c into the central aperture 14a of the rotor or hub 14. The hub has at its outer periphery a flange 15 depending downwardly therefrom. A magnet 16 is secured on the inner peripheral surface of the flange 15 so as to be opposed with the outer peripheral surface of the stator 17 mounted on the outer peripheral surface of the sleeve 3. There are slight clearances between the magnet and the stator. The stator includes coils 18 for conducting current.

The hub 14 of the hard disk drive device of the present invention is provided with an inner shoulder 19 of diameter D₄ smaller than the outer diameter D₂ of the magnet 16. As can be appreciated, the diameter D₄ is substantially the same as the inner diameter of the central aperture 20a of the magnetic disk 20. The disk is fitted around the inner shoulder 19, and then clamped between the flat surface of the shoulder 19 and a disk restraining plate 21. The plate is adapted to be secured on the hub 14 by thread 21a.

The hub 14 is also provided with an outer shoulder 22 of diameter D₃ larger than the outer diameter D₄ of the inner shoulder 19 and smaller than the outer diameter D₁ of the flange 15. The outer shoulder provides a clearance S between the magnetic disk 20 and the flange 15. This structure allows the access of the magnetic head 23 for writing and/or reading datum and the head arm 24 supporting the head 23 at its distal end to the central portion of the lower surface of the magnetic disk. Further, the influence of the leakage of the magnetic flux from the magnet 16 and/or stator 17 to be affected on the magnetic disk 20 and/or magnetic head 23 is reduced by the clearance S.

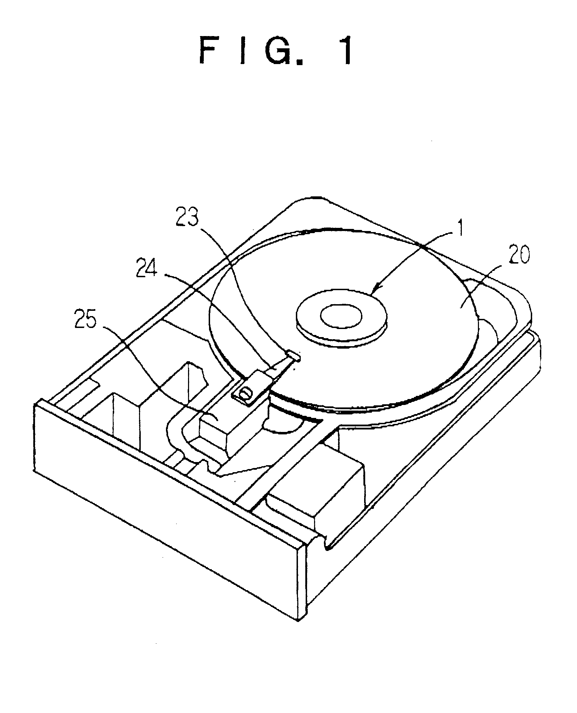

The head positioning mechanism 25 for moving the magnetic head 23 to the desired radial location on the magnetic disk and stopping it thereat is illustrated diagrammatically in Fig. 1.

In the hard disk drive device of the present invention, the outer diameter D₁ of the downwardly depending flange 15 is substantially larger than the outer diameter D₄ of the inner shoulder 19 and/or the inner diameter of the central aperture 20a of the magnetic disk 20. Even though the magnetic disk 20 standardized in the size of the central aperture 20a is used, it is possible to enlarge the outer diameter of the downwardly depending flange 15, with no restraint from the inner diameter of the central aperture 20a of the magnetic disk 20.

In this structure, the outer diameter D₂ and the inner diameter of the magnet 16, the outer diameter and the inner diameter D₅ of the stator 17, and the outer diameter and the inner diameter of the sleeve 3, are also enlarged, so that bearing means 4 having a larger outer diameter D₆ can be used. In other words, bearing means of higher strength can be used without reducing the radial thickness of the magnet 16 or the radial length of the stator 17, i.e. without any loss of magnetic flux from the magnet and/or the stator. Consequently, the bearing means can be strengthened without interfering with the performance of the motor.

Moreover, the outer diameter D₇ of the shaft 5 can also be enlarged to improve the impact resistance thereof. In the bearing means of the above mentioned embodiment, the impact resistance of the shaft is substantially improved, since the shaft 5 is one that includes a larger diameter portion 5a.

Although the base 2 and the sleeve 3 are formed integrally with each other by using the same material in the above mentioned embodiment, these members can be formed separately, and although the shaft 5 and the hub 14 are separate members in the above mentioned embodiment, these members can be made integrally with each other by using the same material.

Although the bearing means 4 is formed as the double row ball bearing, a pair of ball bearings can be substituted therefor, and although the shaft 5 is formed as a stepped shaft, a straight shaft can be substituted therefor. Further, any other bearing such as a fluid bearing or a pneumatic bearing can also be used.

Finally, although the motor of the above-mentioned embodiment is of the outer rotor type, a motor of inner rotor type can also be substituted therefor.

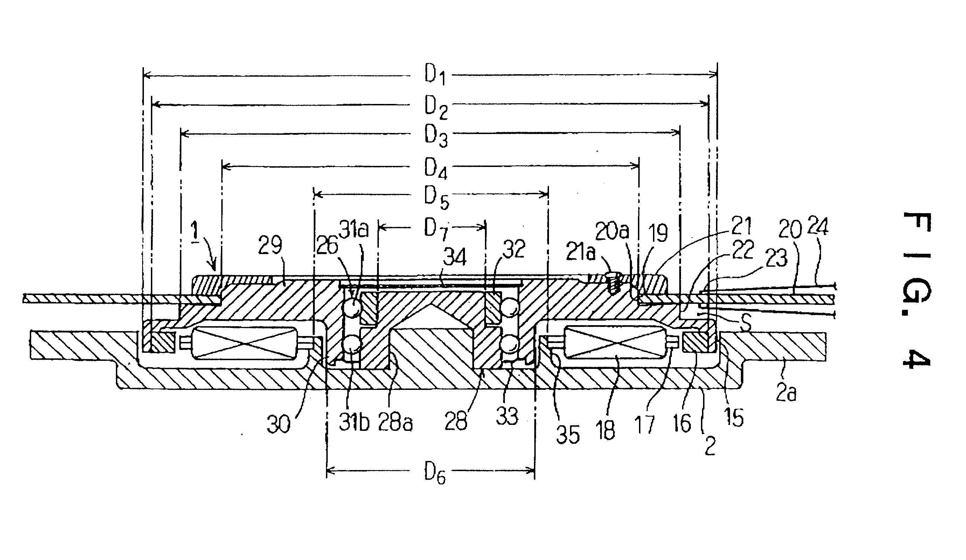

The second embodiment of the hard disk drive device in accordance with the present invention will be described with reference to Fig. 4. This embodiment is different from the above-mentioned first embodiment in the structure around the bearing means 26 journalling the hub 29. In the structure of this embodiment, an aperture 28a of a shaft 28 is fitted on a boss 27 provided on the central portion of the base 2, and a hub or rotor 29 is journalled around the shaft through a bearing means 26 interposed therebetween.

Said bearing means 26 includes an outer race 30 of sleeve form with which upper and lower rolling contact grooves are provided on its inner peripheral surface, the stepped shaft 28 having a larger diameter portion and a reduced diameter portion, an inner race 32 having on its outer peripheral surface an outer rolling contact groove, and upper and lower balls 31a and 31b interposed between the outer race and the shaft or inner race. The upper balls 31a are interposed between the inner race 32 and an upper rolling contact groove formed on the inner peripheral surface of the outer race 30. The lower balls 32b are interposed between the rolling contact groove formed directly on the surface of the larger diameter shaft portion and the lower rolling contact groove formed directly on the surface of inner peripheral surface of the outer race 30. Further, a sealing plate 33 is mounted on the lower end of the outer race 30. The outer diameter of the larger diameter portion of the shaft and that of the inner race 32 are substantially identical, so that balls of substantially the same diameter are used as the balls 31a and 31b.

The outer race 30 of sleeve form is formed integrally with the hub 29 by using the same material, and the opening formed though the bearing means is closed by the lid plate 34.

The stator 17 is connected to the stator holder 35 formed integrally with the base by using the same material.

In this embodiment, the hub 29 is also provided with inner and outer shoulders 19 and 22. The outer diameter D₁ of the downwardly depending flange 15 is larger than the outer diameter D₄ of the inner shoulder 19. The diameter D₄ is substantially the same as the inner diameter of the central aperture 20a of the magnetic disk 20. Even though the magnetic disk 20 standardized in the size of the central aperture 20a is used, it is possible to enlarge the outer diameter of the downwardly depending flange 15, with no restraint from the inner diameter of the central aperture 20a of the magnetic disk 20.

In this structure, the outer diameter D₂ and inner diameter of the magnet 16 confined within the boundary of the flange 15, and the outer diameter D₅ and inner diameter of the stator 17, are also enlarged, so that bearing means 26 having a larger outer diameter can be used. In other words, bearing means of higher strength can be used without reducing the radial thickness of the magnet 16 or the radial length of the stator 17, i,e. without reducing the density of the magnetic flux from the magnet and/or the stator. Consequently, the bearing means can be strengthened without interfering with the performance of the motor.

Moreover, the outer diameter D₇ of the shaft 28 can also be enlarged to improve the impact resistance thereof.

### The effects and advantages of the present invention

The hard disk drive device in accordance with the present invention having a construction as mentioned above will provide following effects. It is possible to enlarge and strengthen the bearing means without limitation by the inner diameter of the central aperture of the magnetic disk. In this connection, the impact resistance of the bearing means against damage thereof by the concentration of stress due to the impact of the hard disk drive device can be increased substantially, and the lifetime of the bearing means can be extended accordingly.

Consequently, a hard disk drive device of mechanically higher reliability as well as long lifetime can be provided.

The high accuracy of rotation can be obtained by enlarging the size of the bearing means, i.e. the possibility of decreasing the accuracy of rotation is reduced. The motor for driving the magnetic disk can be rotated accurately at high speed, and a reduction of the noise and vibration due to rotation can be achieved.

The high accuracy of rotation will assure the high packing density of the magnetic disk and the high capacity of memory for storing data.

Further, the diameter of the shaft can be enlarged in the larger bearing means. Thus, the vibration and the noise produced by resonance can be eliminated.

The outer shoulder formed outwardly of the inner shoulder will provide a clearance between the magnetic disk and the flange. This structure allows the access of the magnetic head and the head arm into the central portion of the lower surface of the magnetic disk, so that the memory surface of the magnetic disk can be utilized efficiently. Further, due to the clearance, the influence of the leakage of the magnetic flux from the magnet and/or the stator on the magnetic disk and/or the magnetic head is reduced or eliminated to increase the reliability of the hard disk drive device.

While particular embodiments of the present invention have been illustrated and described, it should be obvious to those skilled in the art that various changes and modifications can be made without departing from the spirit and scope of the invention.

## Claims

1. A hard disk drive device comprising
a motor including;
a rotor or hub having, around the outer periphery thereof, a downwardly depending flange, said hub being journalled rotatably on a base by means of a bearing means, said hub being provided with a magnet on the inner peripheral surface of the downwardly depending flange, the hub also being provided with an inner shoulder on the top thereof; and,
a stator provided on the base so as to be opposed face to face with said magnet, said stator including coils: and,
a magnetic disk having a central aperture to be fitted around the inner shoulder provided on the hub:
wherein the outer diameter of the downwardly depending flange of said hub is larger than the inner diameter of the central aperture of the magnetic disk, the outer diameter of said magnet surrounded by said downwardly depending flange is larger than the outer diameter of said inner shoulder, the inner diameter of the magnet as well as the outer and inner diameters of the stator are enlarged, and the outer diameter of the bearing means is enlarged.

2. The hard disk drive device according to claim 1, wherein the bearing means includes an outer race of sleeve form mounted vertically on said base, a stepped shaft having an upper enlarged diameter shaft portion and a lower reduced diameter shaft portion, an inner race fitted around the reduced diameter portion of the shaft, and upper and lower rows of balls, wherein said outer race is provided on the inner peripheral surface thereof with upper and lower rolling contact grooves, said hub is fixedly secured to the upper end of the shaft, balls of the upper row are interposed between a rolling contact groove formed directly on the outer peripheral surface of the larger diameter portion of said shaft and the upper rolling contact groove of said outer race, and balls of the lower row are interposed between a rolling contact groove formed on the outer peripheral surface of the inner race and the lower rolling contact groove of said outer race.

3. The hard disk drive device according to claim 2, wherein the outer diameter of the larger diameter portion of said shaft and that of the inner race are substantially equal, so that the diameter of the balls of the upper row is substantially equal to that of the balls of the lower row.

4. The hard disk drive device according to claim 1, wherein the bearing means includes an outer race of sleeve form integrally formed with said hub to depend downwardly from the central portion of said hub, a stepped shaft having a lower enlarged diameter shaft portion and an upper reduced diameter shaft portion, an inner race fitted around the reduced diameter portion of the shaft, and upper and lower rows of balls, wherein said outer race is provided on the inner peripheral surface thereof with upper and lower rolling contact grooves, said shaft is mounted vertically on said base, the balls of the upper row are interposed between a rolling contact groove formed on the outer peripheral surface of the inner race and the upper rolling contact groove of said outer race, and the balls of the lower row are interposed between a rolling contact groove formed directly onto the outer peripheral surface of the larger diameter portion of said shaft and the lower rolling contact groove of said outer race.

5. The hard disk drive device according to claim 4, wherein the outer diameter of said larger diameter portion of said shaft is substantially equal to that of the inner race, so that the diameter of the balls of the upper and lower rows are substantially identical with each other,

6. A hard disk drive device comprising
a motor including;
a rotor or hub having, around the outer periphery thereof,a downwardly depending flange, said hub being journalled rotatably on a base by means of a bearing means, said hub being provided with a magnet on the inner peripheral surface of the downwardly depending flange, the hub also being provided with an inner shoulder on the top thereof; and,
a stator provided on the base so as to be opposed face to face with said magnet, said stator including coils: and,
a magnetic disk having a central aperture to be fitted around the inner shoulder provided on the hub:
wherein the outer diameter of the downwardly depending flange of said hub is larger than the inner diameter of the central aperture of the magnetic disk, the outer diameter of said magnet surrounded by said downwardly depending flange is larger than the outer diameter of said inner shoulder, the inner diameter of the magnet as well as the outer and inner diameters of the stator are enlarged, and the outer diameter of the bearing means is enlarged, said hub also including an outer shoulder larger in its diameter than that of the inner shoulder and smaller than that of the downwardly depending flange to form a clearance allowing the access of the magnetic head into the space defined between the downwardly depending flange and the magnetic disk.

7. The hard disk drive device according to claim 6, wherein the bearing means includes an outer race of sleeve form mounted vertically on said base, a stepped shaft having an upper enlarged diameter shaft portion and a lower reduced diameter shaft portion, an inner race fitted around the reduced diameter portion of the shaft, and upper and lower rows of balls, wherein said outer race is provided on the inner peripheral surface thereof with upper and lower rolling contact grooves, said hub is fixedly secured to the upper end of the shaft, balls of the upper row are interposed between a rolling contact groove formed directly on the outer peripheral surface of the larger diameter portion of said shaft and the upper rolling contact groove of said outer race, and balls of the lower row are interposed between a rolling contact groove formed on the outer peripheral surface of the inner race and the lower rolling contact groove of said outer race.

8. The hard disk drive device according to claim 7, wherein the outer diameter of the larger diameter portion of said shaft and that of the inner race are substantially equal, so that the diameter of the balls of the upper row is substantially equal to that of the balls of the lower row.

9. The hard disk drive device according to claim 6, wherein the bearing means includes an outer race of sleeve form integrally formed with said hub to depend downwardly from the central portion of said hub, a stepped shaft having a lower enlarged diameter shaft portion and an upper reduced diameter shaft portion, an inner race fitted around the reduced diameter portion of the shaft, and upper and lower rows of balls, wherein said outer race is provided on the inner peripheral surface thereof with upper and lower rolling contact grooves, said shaft is mounted vertically on said base, the balls of the upper row are interposed between a rolling contact groove formed on the outer peripheral surface of the inner race and the upper rolling contact groove of said outer race, and the balls of the lower row are interposed between a rolling contact groove formed directly onto the outer peripheral surface of the larger diameter portion of said shaft and the lower rolling contact groove of said outer race.

10. The hard disk drive device according to claim 9, wherein the outer diameter of said larger diameter portion of said shaft is substantially equal to that of the inner race, so that the diameter of the balls of the upper and lower rows are substantially identical with each other.
